# EUROPEAN PATENT SPECIFICATION

(11) **EP 0 407 560 B1**
(45) Date of publication and mention of the grant of the patent: **21.06.1995**
(21) Application number: 90902731.0
(22) Date of filing: 08.01.1990
(51) Int. Cl.: B01D 15/08

(54) **CHROMATOGRAPHY ON A CONTINUOUS POLYMER**
CHROMATOGRAPHIE AUF EINEM KONTINUIERLICHEM POLYMER
CHROMATOGRAPHIE SUR UN POLYMERE CONTINU

(30) Priority: 13.01.1989 US 297501
(43) Date of publication of application: 16.01.1991
(73) Proprietor: BIO-RAD LABORATORIES, INC., Hercules California 94547 (US)
(72) Inventor: HJERTEN, Stellan, S-752 52 Uppsala (SE)
(74) Representative: Armitage, Ian Michael
(86) International application number: US9000191
(87) International publication number: WO9007965

(56) References cited:
- DE-A- 1 442 443
- NL-A- 6 803 739
- US-A- 3 808 125
- US-A- 3 878 092
- US-A- 4 793 920
- Mikes, Laboratory Hardbook of Chromatographic and Allied Methods published1679, by Ellis Horwood Limited see pages 335, 336, 343-347, and 412-414,especially page 343, lines 1-10

## Description

This invention relates to chromatographic separations based on common chromatographic properties such as molecular size, charge, hydrophobicity, and bioaffinity and also to chromatographic separation media useful for such separations.

Conventional chromatography involves the passage of a sample through a bed of beads. It is not possible, however, to achieve a perfectly packed bed. Heterogeneities in the packed bed give rise to zone broadening, which is a disturbing factor. Further disadvantages of packed beds are the time-consuming and expensive steps required for preparation of the beads, the sieving of the beads to select the desired size, and the packing of the column with the beads.

Dutch Patent NL-A-6 803 739 describes the production of macroporous polymers and copolymers by polymerisation in the presence of a liquid solvent.

The present invention provides a method of making a chromatographic column containing a separation medium comprising a water-insoluble plug spanning the cross-sectional area of the column, in which the water-insoluble plug is made by polymerising linear chain-forming monomer (LCFM) and cross-linking agent (CLA) from solution to form a solid cross-link polymer structure having internal channels enabling the permeation of macromolecular eluents through the plug, characterised in that the solution is an aqueous solution of the monomers, comprising from 2 to 10 wt% of the combined LCFM and CLA, and in that the CLA constitutes at least 45 mol% of the combined CLA and LCFM.

It has now been discovered that the above mentioned disadvantages can be avoided by the use of a chromatographic column prepared in this way. The chromatographic separation medium obtained is in the form of a continuous, coherent gel plug formed from monomers which upon polymerization form a structure which has channels large enough to permit the passage of an eluent, and properties rendering it useful for such separation techniques as molecular sieve, ion exchange, hydrophobic interaction, affinity, boronate, and dye ligand chromatography. Hence the invention further provides a chromatographic column which contains a separation medium comprising a water-insoluble plug spanning the cross-section of the column, obtainable by the above described method.

In a further embodiment, the invention provides a method of separating a mixture of macromolecular species in a liquid sample into components on the basis of molecular size which comprises passing said sample through a chromatographic column as described above.

Suitable monomers for use in the method of the invention include species which are of limited solubility in water. When these monomers are used in sufficient amounts or proportions, the resulting polymers have a sufficiently hydrophobic character to cause them to precipitate out of solution. As a result of this precipitation, the polymer chains tend to adhere to each other in bundles, with the voids or channels referred to above forming between the bundles. One example of a monomer meeting this description is N,N'-methylenebisacrylamide, and preferred polymers in accordance with the invention are polyureas, particularly polyacrylamides.

The highly homogeneous structure of the gel plug produces separation of eluents into very narrow zones, and the plug is easily and reproducibly prepared directly in the capillary, column or other enclosure in which the chromatographic separation is to take place, by simply filling the enclosure with monomer solution.

Further features and advantages of the invention will become apparent from the description which follows.

### DETAILED DESCRIPTION OF THE INVENTION AND PREFERRED EMBODIMENTS

The continuous, channel-permeated structure to be described herein is one which results from a degree of cross-linking which is sufficient to both render an otherwise transparent polyacrylamide gel opalescent, i.e., to make it less water-soluble. The degree of cross-linking will also be sufficient to draw the polymer chains close enough together to form cracks or channels in the polymer network large enough to permit the passage of water and the sample component molecules. The continuous structure adjacent to the cracks may be porous or nonporous.

The formation of these channels will be achieved by using a mole ratio of cross-linking agent to linear-chain-forming monomer of at least 0.45, preferably at least 0.55, and most preferably at least 0.70.

The monomers used to form the polymer will be selected in accordance with the type of chromatography for which the plug is intended to be used. The molecular structure of the monomer and the selection of functional groups on the monomer which will be appropriate for any particular type of chromatography will be readily apparent to those skilled in the art. One may thus for example design a plug within the present invention suitable for use in molecular sieve chromatography, ion exchange chromatography, hydrophobic interaction chromatography, affinity chromatography, boronate chromatography, or dye ligand chromatography.

Preferred linear-chain-forming monomers are acrylamides and other derivatives of acrylic acid. Acrylamide itself is a particularly preferred linear-chain-forming monomer, and may be used alone or in combination with other structurally related species such as the methyl ester of acrylic acid. A preferred cross-linking agent, as mentioned above, is N,N'-methylenebisacrylamide, and for systems where the linear-chain-forming monomer is acrylamide, the mole ratios given above are equivalent to C values (weight percent of cross-linker to total of cross-linker and linear-chain-forming monomer) of 50% or more, 55% or more, and 60% or more.

In the preferred embodiment of the invention in which the polymer is a polyacrylamide, any of the wide variety of cross-linking agents known in the art for use with acrylamide monomer may be utilized. Included among such agents are bisacrylamides, diacrylates, and a wide range of terminal dienes. Specific examples are dihydroxyethylenebisacrylamide, diallyltartardiamide, triallyl citric triamide, ethylene diacrylate, bisacrylylcystamine and N,N'-methylenebisacrylamide.

The plug is formed by polymerization according to conventional techniques well known among those skilled in the art. The plug may for example be formed from an aqueous solution of the monomer and cross-linking agent and polymerization catalysts and other conventional additives directly in the casing or column tube in which the plug is intended to be used. It will be advantageous in such cases to covalently bind the plug to the inner wall of the column. This may be achieved by binding agents, such as for example Bind Silane, according to conventional techniques. Aqueous solutions in which the polymer components comprise from 2% to 10% by weight of the solution are used. Within this range, concentrations of about 2.5% to about 5% are the most preferred.

Separation of a sample into its components is likewise achieved in accordance with conventional techniques. Water, or preferably a buffer solution with a pH of about 7.0 to about 8.5, will preferably serve as a carrier for the sample through the plug, and flow may be achieved by pumping or gravity flow. Detection of the separated sample components may then be achieved by conventional means, either in the column itself, using staining methods if necessary, or downstream of the plug or outside the column as the components elute individually from the column. Separation media of this type are particularly effective for the separation of species having molecular weights ranging from about 1000 to about 1,000,000.

The following examples are offered strictly for purposes of illustration, and are intended neither to limit nor to define the invention in any manner.

### EXAMPLES

A glass wool plug was placed in a Pasteur pipette at the top of the constricted region of the pipette. A length of plastic tubing fitted with a hose clamp was secured to the pipette tip.

A buffer solution containing 0.01 M Tris-HCl and 10% (weight/volume) sucrose at pH 7.5 was poured into the pipette. The hose clamp was then opened. When the buffer level reached the glass wool, the hose clamp was closed to stop the buffer flow.

A deaerated mixture was then poured into the pipette and allowed to polymerize. The mixture consisted of 1 mL of an aqueous solution of acrylamide and N,N'-methylenebisacrylamide (at concentrations and proportions listed below), 6 »L of a 10% (weight/volume) solution of ammonium persulfate, and 1 »L of tetramethylethylenediamine.

Once the solution polymerized, it formed a non-water-soluble continuous structure spanning the width of the pipette above the glass wool. A sample consisting of the following components was then applied to the top of the polymer structure:

| | |
|---|---|
| phycoerythrin | M.W. 290,000 |
| phycocyanin | M.W. 135,000 |
| cytochrome | M.W. 13,000 |
| bromophenol blue | M.W. 1,000 |

A buffer solution consisting of 0.01 M Tris-HCl, pH 7.5, was layered above the sample, and the sample and buffer solution were permitted to flow through the pipette by gravity flow. A variety of polyacrylamide compositions and buffer solution flow rates were used, as listed in the table below. In this table, the symbol T designates the concentration in weight percent of the acrylamide and N,N'-methylenebisacrylamide combined in the forming solution, the symbol C designates the proportion of N,N'-methylenebisacrylamide to the combination of acrylamide and N,N'-methylenebisacrylamide expressed in weight percent, and the last column represents the flow rates in values relative to each other for each C value. The flow rate given for T = 4, C = 60 is equivalent to about 4-5 hours for the entire elution. Direct comparisons can be made among flow rates for the various C values with a single T value.

| Gel Composition | | Gravity Flow |
|---|---|---|
| T (%) | C (%) | |
| 4 | 60 | 0.8 |
| 4 | 50 | 0.3 |
| 4 | 40 | <0.3 |
| 4 | 30 | <0.3 |
| 4 | 20 | 0 |
| 3 | 60 | 2.5 |
| 3 | 50 | 1.8 |
| 3 | 40 | <1.8 |
| 3 | 20 | 0 |
| 2 | 60 | 3 |
| 2 | 50 | 5 |
| 2 | 30 | 0 |
| 20 | 30 | 0 |
| 20 | 15 | 0 |
| 10 | 30 | 0 |
| 6 | 10 | 0 |
| 6 | 20 | 0 |
| 6 | 30 | 0 |

In those runs where a positive gravity flow was detectable, the four components listed above separated into discrete bands, in order of increasing molecular weight, with the component of highest molecular weight (phycoerythrin) showing the greatest mobility through the column.

## Claims

1. A method of making a chromatographic column containing a separation medium comprising a water-insoluble plug spanning the cross-sectional area of the column, in which the water-insoluble plug is made by polymerising linear chain-forming monomer (LCFM) and cross-linking agent (CLA) from solution to form a solid cross-link polymer structure having internal channels enabling the permeation of macromolecular eluents through the plug,
characterised in that
the solution is an aqueous solution of the monomers, comprising from 2 to 10 wt% of the combined LCFM and CLA, and in that the CLA constitutes at least 45 mol% of the combined CLA and LCFM.

2. A method according to claim 1 in which the LCFM is acrylic.

3. A method according to claim 2 in which the LCFM comprises acrylamide.

4. A method according to claim 2 or claim 3 in which the CLA is bisacrylamide, diacrylate or terminal diene.

5. A method according to claim 4 in which the CLA is N,N'-methylenebisacrylamide.

6. A method according to claim 5 in which the N,N'-methylenebisacrylamide constitutes at least 50 wt% of the combination thereof with the acrylic LCFM.

7. A method according to claim 6 in which the N,N'-methylenebisacrylamide constitutes at least 60 wt% of the combination thereof with the acrylic LCFM.

8. A method according to any one of the preceding claims in which the aqueous solution comprises from 2 to 5 wt% of the combined LCFM and CLA.

9. A method according to any one of the preceding claims in which the water-insoluble plug is formed *in situ* by filling a chromatograph column enclosure with the aqueous solution containing the LCFM and CLA and then polymerising them.

10. A chromatographic column which contains a separation medium comprising a water-insoluble plug spanning the cross-section of the column, obtainable by a method according to any one of claims 1 to 9.

11. A chromatographic column according to claim 10 in which the water-insoluble plug is saturated with a buffer solution of pH from 7.0 to 8.5.

12. A method of separating a mixture of macromolecular species in a liquid sample into components on the basis of molecular size, which comprises passing said sample through a chromatographic column according to claim 10 or claim 11.

13. A method according to claim 11 in which the sample passes through the column by gravitational flow.

## Patentansprüche

1. Verfahren zur Herstellung einer Chromatografie-Säule, die ein Trennmedium enthält, das aus einem wasserunlöslichen Stopfen besteht, der sich über die Querschnittfläche der Säule erstreckt, wobei der wasserunlösliche Stopfen durch Polymerisation von lineare Ketten bildendem Monomer (LCFM) und Vernetzer (CLA) in Lösung hergestellt wird, um eine feste, vernetzte Polymerstruktur mit inneren Kanälen zu bilden, die die Permeation von makromolekularen Eluenten durch den Stopfen ermöglichen,
dadurch gekennzeichnet, daß
die Lösung eine wäßrige Lösung der Monomeren ist, die 2 - 10 Gew.-% von LCFM und CLA zusammengezählt umfaßt, und daß der CLA zumindest 45 Mol-% von CLA und LCFM zusammengezählt ausmacht.

2. Verfahren nach Anspruch 1, worin das LCFM acrylisch ist.

3. Verfahren nach Anspruch 2, worin das LCFM Acrylamid umfaßt.

4. Verfahren nach Anspruch 2 oder 3, worin der CLA Bisacrylamid, Diacrylat oder endständiges Dien ist.

5. Verfahren nach Anspruch 4, worin der CLA N,N'-Methylenbisacrylamid ist.

6. Verfahren nach Anspruch 5, worin das N,N'-Methylenbisacrylamid zumindest 50 Gew.-% der Kombination davon mit dem acrylischen LCFM ausmacht.

7. Verfahren nach Anspruch 6, worin das N,N'-Methylenbisacrylamid zumindest 60 Gew.-% der Kombination davon mit dem acrylischen LCFM ausmacht.

8. Verfahren nach irgendeinem der vorangegangenen Ansprüche, worin die wäßrige Lösung 2 - 5 Gew.-% von LCFM und CLA zusammengezählt umfaßt.

9. Verfahren nach irgendeinem der vorangegangenen Ansprüche, worin der wasserunlösliche Stopfen durch Befüllen einer Chromatografie-Säulen-Hülle mit der das LCFM und CLA enthaltenden Lösung und deren anschließende Polymerisation in situ gebildet wird.

10. Chromatografie-Säule, die ein Trennmedium enthält, das aus einem wasserunlöslichen Stopfen besteht, der sich über die Querschnittfläche der Säule erstreckt und nach einem Verfahren nach irgendeinem der Ansprüche 1 - 9 erhalten werden kann.

11. Chromatografie-Säule nach Anspruch 10, worin der wasserunlösliche Stopfen mit einer Pufferlösung mit einem pH von 7,0 - 8,5 gesättigt ist.

12. Verfahren zur Auftrennung eines Gemischs von Makromolekülen in einer flüssigen Probe in die einzelnen Komponenten auf Basis der Molekülgröße, das das Hindurchleiten der Probe durch eine Chromatografie-Säule nach Anspruch 10 oder 11 umfaßt.

13. Verfahren nach Anspruch 11, worin die Probe aufgrund von Schwerkraftfluß durch die Säule hindurchtritt.

## Revendications

1. Méthode de fabrication d'une colonne chromatographique contenant un milieu de séparation comprenant un bouchon insoluble dans l'eau s'étalant sur toute la surface transversale de la colonne, dans laquelle le bouchon insoluble dans l'eau est fabriqué en polymérisant un monomère formant une chaîne linéaire (LCFM) et un agent de réticulation (CLA) à partir d'une solution pour former une structure polymérisée réticulée ayant des sillons internes permettant la perméation d'éluants macromoléculaires à travers le bouchon, caractérisée en ce que la solution est une solution aqueuse des monomères, comprenant 2 à 10% en poids des LCFM et CLA combinés, et en ce que le CLA constitue au moins 45 moles% des CLA et LCFM associés.

2. Méthode selon la revendication 1, dans laquelle le LCFM est acrylique.

3. Méthode selon la revendication 2, dans laquelle le LCFM comprend un acrylamide.

4. Méthode selon la revendication 2 ou la revendication 3, dans laquelle le CLA est un bisacrylamide, un diacrylate ou un diène terminal.

5. Méthode selon la revendication 4 dans laquelle le CLA est un N,N'-méthylènebisacrylamide.

6. Méthode selon la revendication 5 dans laquelle le N,N'-méthylènebisacrylamide constitue au moins 50% en poids de la combinaison de ce dernier avec le LCFM acrylique.

7. Méthode selon la revendication 6 dans laquelle le N,N'-méthylènebisacrylamide constitue au moins 60% en poids de la combinaison de ce dernier avec le LCFM acrylique.

8. Méthode selon l'une quelconque des revendications précédentes dans laquelle la solution aqueuse comprend de 2 à 5% en poids des LCFM et CLA associés.

9. Méthode selon l'une quelconque des revendications précédentes dans laquelle le bouchon insoluble dans l'eau est formé *in situ* en remplissant une enceinte de colonne de chromatographie avec la solution aqueuse contenant le LCFM et le CLA et ensuite en les polymérisant.

10. Colonne chromatographique qui contient un milieu de séparation comprenant un bouchon insoluble dans l'eau recouvrant la section transversale de la colonne, pouvant être obtenue par une méthode selon l'une quelconque des revendications 1 à 9.

11. Colonne chromatographique selon la revendication 10, dans laquelle le bouchon insoluble dans l'eau est saturé avec une solution tampon de pH de 7,0 à 8,5.

12. Méthode de séparation d'un mélange d'espèces macromoléculaires dans un échantillon liquide en composants, sur la base de la taille moléculaire, qui comprend le passage dudit échantillon à travers une colonne chromatographique selon la revendication 10 ou la revendication 11.

13. Méthode selon la revendication 11 dans laquelle l'échantillon passe à travers la colonne par écoulement gravitationnel.
